# FASCICULE DE BREVET EUROPEEN

(11) **EP 2 351 120 B1**
(45) Date de publication et mention de la délivrance du brevet: **16.10.2013**
(21) Numéro de dépôt: 09759786.8
(22) Date de dépôt: 29.10.2009
(51) Int. Cl.: H01M 4/14, H01M 4/20, H01M 10/06

(54) **MATÉRIAU FIBREUX EN FEUILLE D'EMPÂTAGE PERMANENT POUR BATTERIE OUVERTE ET/OU ÉTANCHE ET BATTERIE OUVERTE ET/OU ÉTANCHE COMPRENANT UN MATÉRIAU D'EMPÂTAGE PERMANENT**
FASERIGES MATERIAL IN FORM EINER DAUERHAFTEN PASTIERFOLIE FÜR EINE VERSCHLOSSENE UND/ODER UNVERSCHLOSSENE BATTERIE SOWIE VERSCHLOSSENE UND/ODER UNVERSCHLOSSENE BATTERIE UMFASSEND EIN DAUERHAFTES PASTIERMATERIAL
FIBROUS MATERIAL IN FORM OF A PERMANENT PASTING SHEET FOR AN OPEN AND/OR SEALED BATTERY, AND OPEN AND/OR SEALED BATTERY COMPRISING A PERMANENT PASTING MATERIAL

(30) Priorité: 29.10.2008 FR 0806003
(43) Date de publication de la demande: 03.08.2011
(73) Titulaire: Bernard Dumas, 24100 Creysse (FR)
(72) Inventeur: CLEMENT, Nicolas, F-38850 Charavines (FR); DOILLON, Daniel, F-24100 Creysse (FR); BAYLE, Sylvie, F-24150 Bayac (FR); BENATTAR, Nicolas, F-24100 Bergerac (FR)
(74) Mandataire: Tanty, François
(86) Numéro de dépôt international: PCT/IB2009/054801
(87) Numéro de publication internationale: WO 2010/049905

(56) Documents cités:
- EP-A- 0 267 092
- DE-A1- 2 910 203
- DE-A1- 4 036 233
- FR-A- 2 537 921
- FR-A- 2 677 672
- JP-A- 8 130 001
- JP-A- 61 096 659
- JP-A- 63 152 850
- JP-A- 2001 176 481
- US-A1- 2008 014 506
- US-A1- 2008 199 769

## Description

La présente invention concerne un matériau fibreux en feuille d'empâtage permanent, notamment pour batterie ouverte et/ou étanche, ainsi qu'une batterie ouverte et/ou étanche comprenant un matériau en feuille d'empâtage permanent et un procédé d'empâtage de grille d'électrode utilisant ledit matériau fibreux.

Les batteries plomb/acide sont formées de plusieurs éléments qui comprennent une plaque électrode positive et une autre négative séparées par un séparateur tridimensionnel poreux et isolant, (en général un film de polymère extrudé spécialement conçu pour une application en batterie ouverte ou un séparateur en microfibres de verre pour application dans les batteries étanches), le tout trempant dans un électrolyte acide (généralement de l'acide sulfurique dilué). Les batteries ouvertes contiennent généralement de l'électrolyte liquide alors que dans les batteries étanches, l'électrolyte peut être gélifié ou absorbé en matière microporeuse. plaques électrodes sont des grilles à base de plomb enduites d'une pâte de matière active spécifique à base de plomb / lignine / fibres minérales / acide, et éventuellement d'autres ingrédients spécifiques au fabricant de batterie, pour assurer le fonctionnement de la batterie et sa cyclabilité (durabilité) c'est-à-dire permettre un certain nombre de cycles de charge/décharge de la batterie au cours du temps. Cette matière active a été apportée par empâtage de grilles qui se fait par dépôt en continu de la matière active sur une grille continue avec application d'un papier dit papier d'empâtage sur au moins l'une des faces et qui aide à retenir ladite matière sur la grille lors de sa fabrication et manipulation ; la grille continue avec ledit papier est ensuite découpée au format requis pour les électrodes. Ultérieurement, les électrodes sont agencées et mises en place lors du montage de la batterie.

Les documents FR 2 677 672, EP 0 267 092, US 2008/199769, JP 61-096659, JP 2001-176481, JP 08-130001, JP 63-152850, FR 2 537 921, DE 40 36 233 et DE 29 10 203 décrivent des exemples de feuilles utilisables comme séparateurs pour batteries ou accumulateurs.

FR 2 677 672 décrit une feuille, pour séparateur de batterie, composée d'un mélange de fibres de verres et de fibres synthétiques, la liaison entre les fibres de verre pouvant être obtenue par ramollissement de fibres synthétiques, par exemple en polyester régulier.

EP 0 267 092 décrit un papier pour séparateur de batterie, comportant des fibres de verre, et un liant acrylique, les propriétés du matériau en feuilles étant reliées au degré de « *finesse »* des fibres.

US 2008/0199769 décrit un matériau pour séparateur de batterie composé d'un mélange de fibres de verre et de fibres organiques, destiné à servir de séparateur dans une batterie.

JP 61-096659 décrit un matériau non tissé pour séparateur de batterie comportant des fibres de verre, des fibres acryliques pour optimiser la résistance mécanique, un liant acrylique, et des fibres de polypropylène servant de résine thermoplastique résistante aux acides.

JP 2001-176481 décrit un séparateur pour batterie comprenant des fibres de verre et une résine phénolique pour capter l'antimoine.

JP 08-130001 décrit un séparateur de batterie comportant une poudre de silice, des fibres de verre, des fibres synthétiques résistantes aux acides et une résine liante.

JP 63-152850 décrit un séparateur comportant des fibres de verre et un liant polymère résistant aux acides, par exemple un liant acrylique.

FR 2537921 décrit une feuille à base de fibre de verre et d'une poudre de résine époxyde comprenant un agent réticulant, pour fabriquer des circuits imprimés.

Dans DE 40 36 233, un procédé de fabrication d'une électrode pour accumulateur au plomb est décrit, l'électrode comportant une enveloppe constituée d'un matériau non tissé en fibres synthétiques ou fibres de verre.

DE 2910203 divulgue un élément de batterie comportant une enveloppe constituée d'un tissu de fibres plastiques résistantes aux acides auxquelles sont ajoutées des fibres de verre.

Les papiers d'empâtage usuels pour batterie ouverte sont des papiers cellulosiques de grammage d'environ 10 à 15 g/m², ils doivent avoir de bonnes résistances mécaniques pour permettre leur manipulation, notamment lors de leur mise en oeuvre dans les procédés d'empâtage.

Les papiers d'empâtage usuels pour batterie étanche sont des papiers cellulosiques ou des papiers à base de microfibres de verre pouvant comporter des fibres synthétiques.

Ces papiers d'empâtage se désagrègent ensuite rapidement dans la batterie lorsqu'il est mis en contact avec l'électrolyte acide toutefois ceci peut perturber son bon fonctionnement. En effet, les résidus et produits de dégradation du papier sont mis en mouvement notamment par les phénomènes de convection au sein de la batterie engendrés par les réactions d'électrolyse, le bullage de l'électrolyte et l'agitation thermique induite par les réactions chimiques exothermiques. Ces résidus peuvent donc gêner les réactions chimiques et/ou encrasser les électrodes et ainsi altérer la capacité de cyclabilité de la batterie et donc sa durée de vie.

Par ailleurs, dans le cas d'une batterie ouverte, l'acide et les plaques empâtées sont libres dans la batterie. La fonction de maintien mécanique de la matière active par le papier disparaît du fait de la dégradation du papier dans l'acide, ce qui a pour conséquence que cette matière active se désagrège, tombe au fond de la batterie et peut provoquer à la fois des pertes de capacités mais aussi des courts-circuits et des corrosions prématurées ; ceci a donc aussi un effet négatif sur la cyclabilité de la batterie.

Pour améliorer la cyclabilité de la batterie ouverte, certains associent un voile de verre au papier d'empâtage cellulosique, toutefois ceci oblige à une opération supplémentaire pour adjoindre le voile de verre au papier. En effet le voile de verre, bien que restant au contact de la grille, ne permet pas l'empâtage de cette dernière de sorte qu'un papier d'empâtage cellulosique doit être utilisé.

Dans la demande de brevet US 2008-014506 A1, on propose d'améliorer la cyclabilité d'une batterie plomb/acide comprenant une soupape en utilisant notamment un papier d'empâtage qui comprend un absorbeur de métaux lourds qui est un composé de terre rare, par exemple de l'hydroxyde de cérium. Les papiers d'empâtage décrits aux exemples 3 et 4 colonne 5 de cette demande de brevet sont à base de microfibres de verre et comportent comme liant des fibres organiques qui sont soit de la cellulose microfibrillée soit des fibres synthétiques thermoliantes. Le liant utilisé sera donc attaqué par l'électrolyte acide et on pourra avoir aussi des problèmes de fonctionnement de la batterie liés à la dégradation du papier et au manque de maintien de la pâte de matière active.

La présente invention a pour but de résoudre les problèmes de cyclabilité des batteries ouvertes induits par les papiers d'empâtage de l'art antérieur utilisés dans ces batteries, et d'améliorer le procédé d'empâtage des plaques pour batterie étanche à partir de papier d'empâtage en microfibres de verre.

Pour résoudre les problèmes de l'art antérieur, les inventeurs ont eu l'idée de proposer que le matériau d'empâtage, contrairement à ceux de l'art antérieur, ne soit pas destructible une fois mis en place dans son milieu d'application au sein d'électrolytes acides et donc qu'il soit permanent. Il n'y a ainsi plus de résidus ou produits de dégradation du matériau d'empâtage qui entravent le fonctionnement de la batterie.

Par ailleurs, ledit matériau selon l'invention peut résister aussi à une température de 75°C, température préconisée par les fabricants de batterie.

De plus, le matériau proposé par l'invention peut agir également sur la cyclabilité d'une batterie ouverte par le fait qu'il peut permettre de maintenir mécaniquement et plus solidement la matière active d'empâtage proche de sa position initiale au sein de la batterie et permettre ainsi d'améliorer encore plus la durée de vie de la batterie ouverte, la matière active étant maintenue elle ne peut pas se désagréger et tomber au fond de la batterie pour entraîner les pertes de capacités, les courts-circuits et les corrosions prématurées de l'art antérieur.

De plus, ledit matériau selon l'invention, de part sa forte porosité, son caractère hydrophile et permanent, peut permettre de limiter les phénomènes de stratification de l'acide libre contenu dans la batterie. En effet, selon l'art antérieur, ce phénomène de stratification conduit à une répartition hétérogène de l'acide à la surface des plaques et est identifié comme un des principaux modes de défaillances des batteries ouvertes.

De plus, la résistance mécanique accrue de ce matériau d'empâtage peut permettre une bonne tenue du papier d'empâtage sur les lignes d'empâtage en continu, en remplacement du papier cellulosique.

Selon un premier aspect de l'invention, il est proposé un matériau d'empâtage permanent pour batterie, tel que défini dans la revendication 1 notamment pour batterie ouverte et/ou étanche, qui est un matériau fibreux en feuille comprenant des microfibres de verre et un liant hydrophile qui présentent une résistance aux électrolytes acides, le liant évitant notamment que les microfibres se désolidarisent et se dispersent dans l'électrolyte. Le liant peut contribuer aussi à conférer audit matériau le niveau d'hydrophilie requis pour être entièrement imbibé d'électrolyte, ainsi qu'une résistance mécanique accrue pour permettre le remplacement du papier d'empâtage cellulosique sur les lignes d'empâtage fonctionnant en continu sans réduction de la vitesse d'empâtage.

La batterie peut être une batterie plomb/acide. L'électrolyte acide peut être de l'acide sulfurique, notamment dilué.

Le matériau est qualifié de « permanent » dans la mesure où il ne se désagrège pas notablement ni rapidement, qu'il résiste aux acides et dans les conditions usuelles de fonctionnement. En particulier, le matériau permanent peut ne pas se désagréger pendant une durée au moins égale à la durée de vie de la batterie. Il peut donc rester en contact avec la grille d'électrode pendant une durée au moins égale à la durée de vie de la batterie.

Par matériau « hydrophile », on entend qu'il a une bonne capacité à absorber l'électrolyte liquide, c'est-à-dire à remplir tous ses pores. Cette hydrophilie dudit matériau se caractérise par son degré Cobb₆₀, capacité d'absorption d'eau dudit matériau, déterminé selon la norme ISO 535 (eau, 1 minute, 23°C) et exprimé en g/m². Selon l'invention, ledit matériau a un degré Cobb₆₀ supérieur ou égal à trois fois son grammage. Par exemple un matériau de 35 g/m² aura un Cobb₆₀ d'au moins 105 g/m².

Par résistance mécanique « accrue », on entend que le matériau a une résistance mécanique élevée par rapport à son grammage. Cette résistance peut se caractériser par la résistance mécanique à la traction (selon la norme ISO 1924-1 - 1992 (10 mm/min)). Selon l'invention, ledit matériau peut avoir une résistance à la traction normalisée pour 100 g/m² (résistance mécanique divisée par le grammage et multipliée par 100) supérieure ou égale à 4 daN/pouce.

Plus particulièrement, lesdites microfibres de verre peuvent avoir un diamètre inférieur à 5 µm. Elles peuvent être usuellement utilisées pour faire des séparateurs de batterie.

Plus particulièrement, ledit liant hydrophile et résistant acide peut être réticulé, en particulier thermoréticulé. Il peut être choisi parmi les liants polymères à base acrylique, époxy, phénolique, polyester et polyuréthane. De préférence, on choisit un liant polymère à base acrylique. Ces liants peuvent se présenter lors de leur utilisation sous forme de latex (émulsion de polymère en milieu aqueux stabilisée) ; ils peuvent être réticulés, notamment thermoréticulés, au cours du procédé de fabrication dudit matériau.

De préférence, ledit matériau selon l'invention peut comprendre en outre des fibres de verre sous forme de fils de verre coupés et résistants aux électrolytes acides et/ou des fibres synthétiques thermoliantes et résistantes aux électrolytes acides. Ces fils et fibres synthétiques peuvent agir notamment sur la résistance mécanique dudit matériau qui doit être manipulable et peuvent, le cas échéant, faciliter la fabrication dudit matériau.

Selon la présente invention, ledit matériau comprend en poids sec :
- entre 10 et 99,9 parts desdites microfibres de verre, et
- entre 0,1 et 50 parts dudit liant,
- entre 0 et 70 parts desdits fils de verre coupés,
- entre 0 et 90 parts desdites fibres synthétiques thermoliantes,
la somme faisant 100.

Plus particulièrement encore et préférentiellement, ledit matériau selon l'invention peut comprendre en poids sec :
- entre 65 et 95, par exemple entre 65 et 80, parts desdites microfibres de verre, et
- entre 5 et 15, par exemple entre 5 et 10, parts dudit liant,
- entre 0 et 5 parts desdits fils de verre coupés,
- entre 0 et 20, par exemple entre 15 et 20, parts desdites fibres synthétiques thermoliantes,
la somme faisant 100.

Plus particulièrement, ledit matériau selon l'invention peut être tel que lesdits fils de verre coupés ont un diamètre supérieur ou égal à 5 µm et une longueur supérieure ou égale à 3 mm.

Plus particulièrement, ledit matériau selon l'invention peut être tel que lesdites fibres synthétiques sont choisies parmi les fibres bicomposées d'une âme en polyester et d'une couche externe en (co)polyester thermoliante ayant un point de fusion inférieur à 130°C, de préférence leur diamètre étant supérieur ou égal à 5 µm et leur longueur supérieure ou égale à 3 mm. La température de fusion de la partie externe des fibres bicomposées telles que décrites ci-avant peut être de 110°C.

Selon la présente invention, ledit matériau est tel qu'il a un grammage supérieur ou égal à 10 g/m², de préférence supérieur ou égal à 20 g/m², et inférieur ou égal à 60 g/cm² de préférence compris entre 30 et 60 g/m².

De préférence, ledit matériau selon l'invention peut avoir une porosité déterminée selon la norme BCI IV 34-1 (volume de vide) supérieure ou égale à 85%, de préférence supérieure ou égale à 90%.

Ledit matériau selon l'invention peut être obtenu industriellement de préférence par voie humide, c'est-à-dire par un procédé papetier qui consiste à mettre en suspension en milieu aqueux les microfibres de verre et, le cas échéant, les fils de verre coupés et/ou les fibres synthétiques thermoliantes (et éventuellement certains additifs usuels de ce procédé mis en très faibles quantités), puis la feuille fibreuse est formée par égouttage de ce mélange sur la toile d'une machine à papier, le liant est ensuite appliqué sous forme d'une émulsion aqueuse (latex) sur/dans ladite feuille fibreuse puis le matériau obtenu est séché à des températures d'au moins 100°C. De préférence, ladite feuille fibreuse peut être séchée à une température telle qu'elle permette la réticulation dudit liant lorsque celui-ci est réticulable, notamment vers 150°C.

Selon un autre aspect de l'invention, il est proposé une batterie, notamment une batterie ouverte et/ou étanche, qui comprend un matériau en feuille d'empâtage permanente tel que décrit précédemment.

De préférence, ledit matériau en feuille d'empâtage permanent de cette batterie est le matériau fibreux d'empâtage tel que décrit précédemment.

L'invention concerne aussi le procédé d'empâtage d'une grille d'électrode pour batterie, notamment pour batterie ouverte et/ou étanche, par une pâte de matière active, qui se caractérise par le fait qu'il utilise un matériau fibreux en feuille d'empâtage permanent (résistant aux électrolytes acides) tel que décrit précédemment.

L'invention sera mieux comprise à l'aide des exemples non limitatifs suivants présentant la réalisation d'un matériau fibreux en feuille d'empâtage permanent.

### Exemple 1 selon l'invention :

En laboratoire, on met en suspension en milieu aqueux au sein d'un cuvier des microfibres de verre, ayant un diamètre moyen inférieur ou égal à 1 µm, par exemple de 0,8 µm, résistantes aux électrolytes acides (ces fibres sont usuellement utilisées pour les séparateurs de batterie). On forme une feuille fibreuse par égouttage de cette suspension sur une formette de laboratoire puis on sèche cette feuille vers 150°C.

On applique sur une des faces de cette feuille, un liant polymère acrylique, sous forme d'une émulsion aqueuse (latex), qui se répartit par capillarité dans la masse du matelas fibreux de la feuille.

Le matériau ainsi obtenu est alors séché à 150°C pendant 15 minutes, ce séchage permet d'éliminer l'eau amenée lors de l'application de cette émulsion aqueuse et permet la réticulation dudit polymère.

Le matériau, après ce séchage, comprend en poids sec, 95 parts de microfibres de verre et 5 parts de liant.

### Exemple 2 selon l'invention :

On réalise une feuille sur machine à papier industrielle. On met en suspension en milieu aqueux au sein d'un cuvier des microfibres de verre, ayant un diamètre inférieur ou égal à 1 µm, par exemple de 0,8 µm, résistantes aux électrolytes acides (microfibres usuellement utilisées pour les séparateurs de batterie) et des fils de verre coupés (diamètre de 11 µm, longueur de 6 mm), résistants aux électrolytes acides. On forme une feuille fibreuse par égouttage de cette suspension sur la toile de la machine à papier. La feuille est séchée vers 150°C.

On prélève des formats de la feuille séchée en sortie de machine qui vont servir de supports.

En laboratoire, on applique sur une des faces de ces formats un liant polymère acrylique, sous forme d'une émulsion aqueuse (latex), qui se répartit dans la masse du matelas fibreux par capillarité.

Le matériau ainsi obtenu est soumis à un séchage de 150°C pendant 15 minutes qui, comme à l'exemple 1, permet d'éliminer l'eau amenée lors de l'application de cette émulsion aqueuse et de réticuler ledit polymère.

Le matériau, après ce séchage, comprend en poids sec, 20 parts de fils coupés, 75 parts de microfibres de verre et 5 parts de liant.

### Exemple 3 selon l'invention :

On réalise une feuille sur machine à papier industrielle. On met en suspension en milieu aqueux au sein d'un cuvier des microfibres de verre, ayant un diamètre inférieur ou égal à 1 µm, par exemple de 0,8 µm, résistantes aux électrolytes acides (microfibres usuellement utilisées pour les séparateurs de batterie) et des fibres synthétiques bicomposantes thermoliantes en polyester/copolyester (diamètre : 10 µm, longueur : 5mm), résistantes aux électrolytes acides. On forme une feuille fibreuse par égouttage de cette suspension sur la toile de la machine. La feuille est séchée vers 150°C.

On prélève des formats de la feuille séchée en sortie de machine qui vont servir de supports.

En laboratoire, on applique sur une des faces de ces formats, un liant polymère acrylique, sous forme d'une émulsion aqueuse (latex), qui se répartit dans la masse du matelas fibreux par capillarité.

Le matériau ainsi obtenu est soumis à un séchage de 150°C pendant 15 minutes qui, comme à l'exemple 1, permet d'éliminer l'eau amenée lors de l'application de cette émulsion aqueuse et de réticuler ledit polymère.

Le matériau, après ce séchage comprend, en poids sec, 14 parts de fibres synthétiques, 81 parts de microfibres de verre et 5 parts de liant.

### Exemple 4 selon l'invention :

On réalise le matériau d'empâtage sur machine industrielle.

On met en suspension en milieu aqueux au sein d'un cuvier des microfibres de verre, ayant un diamètre moyen inférieur ou égal à 1 µm, par exemple de 0,8 µm, résistantes aux électrolytes acides (microfibres usuellement utilisées pour les séparateurs de batterie) et des fibres synthétiques bicomposantes thermoliantes en polyester/copolyester (diamètre : 10 µm, longueur : 5mm), résistantes aux électrolytes acides. On forme une feuille fibreuse par égouttage de cette suspension sur la toile de la machine à papier.

On applique en ligne sur une des faces de ladite feuille une émulsion aqueuse d'un liant polymère acrylique de manière à répartir ledit liant par capillarité dans la masse du matelas fibreux de la feuille. La concentration de l'émulsion est telle que le taux en liant dans le matériau obtenu est compris entre 10 et 12% en poids sec.

La feuille est séchée vers 150°C. Ce séchage permet d'évacuer l'eau contenue dans le matelas fibreux puis de réticuler ledit polymère acrylique afin de lui conférer une grande résistance mécanique.

Le matériau ainsi obtenu, après ce séchage, comprend en poids sec, 14 parts de fibres synthétiques, 75 parts de microfibres de verre et 11 parts de liant.

Les caractéristiques physiques, de résistance mécanique et de résistance aux électrolytes acides dudit matériau selon ces exemples 1 à 5 sont présentées dans le tableau 1, la réalisation des tests et les commentaires des résultats sont mentionnés ci-après.

### Références et description des tests utilisés :

Les tests sont réalisés sur le matériau fibreux séché selon des normes internationales ISO (International Standard Organisation) ou BCI (Battery Council International).
- Le grammage est mesuré selon la norme ISO 536-1995.
- Le degré Cobb₆₀ est déterminé selon la norme ISO 535 (eau, 1 minute, 23°C).
- L'épaisseur est déterminée selon la norme ISO 9073-2 1989/07/01, sous 2 kPa.
- La porosité (volume de vide) est calculée selon la norme BCI IV 34-1.
- La résistance mécanique à la traction est déterminée selon la norme ISO 1924-1 - 1992 (10 mm/min).
- L'allongement à la rupture (%) est mesuré selon la norme ISO 1924-2 : 1994
- La résistance mécanique dudit matériau en milieu humide (aqueux) est déterminée selon le test suivant : un disque dudit matériau est immergé sous 3 cm d'eau à 23°C et maintenu au fond par un anneau métallique d'un diamètre de 7 cm. Un barreau magnétique de 4,5 g et de 3,5 cm de long est mis sous agitation (à environ 200 tr/min) sur l'échantillon maintenu au fond. On mesure alors le temps au bout duquel l'échantillon sous agitation se désagrège ; en fait dans le cas des matériaux selon ces exemples, on n'observe aucun délitement, on constate uniquement qu'ils commencent à être attaqués en surface au bout de plusieurs jours de test (voir tableau 1, nombre de jours au bout duquel l'échantillon est attaqué).
- La résistance du matériau à l'acide sulfurique est mesurée selon le test BCI XII 34-1 qui est usuellement utilisé pour les séparateurs de batterie à base de microfibres de verre.

Pour les matériaux selon les exemples 1 à 5, on constate que la perte de poids du matériau en milieu acide est mesurée inférieure à 1% et le taux de métaux extractibles est conforme aux taux habituellement mesurés sur les séparateurs de batteries en microfibres de verre (Cu < 5 ppm, Cr < 5 ppm, Fe < 50 ppm, Mn < 5 ppm, Ni < 5 ppm, Al < 900 ppm, Zn < 20 ppm).

On montre ainsi que le liant des matériaux selon l'invention, si on se réfère par comparaison aux séparateurs de batterie usuels à base de microfibres de verre mais sans liant, n'augmente pas le taux d'extractibles selon le test BC XII 34-1.

Par ailleurs, compte-tenu de leur nature, lesdits matériaux selon les exemples peuvent bien résister à la température, notamment à une température d'au moins 75°C.

Les matériaux d'empâtage selon l'invention peuvent donc avoir une bonne résistance mécanique, à la température, aux acides, une bonne hydrophilie et une porosité élevée.

**TABLEAU 1**

| **EXEMPLES** | **1** | **2** | **3** | **4** |
|---|---|---|---|---|
| Grammage (g/m²) | 40 | 35 | 35 | 41,2 |
| Cobb₆₀ (g/m²) | 160 | 190 | 175 | 160 |
| Epaisseur (mm) | 0,24 | 0,21 | 0,21 | 0,24 |
| Porosité (%) | 93,3 | 93,3 | 93,3 | 92,2 |
| Résistance à la traction | | | | |
| (daN/pouce) | 1,6 | 1,9 | 2,2 | 3,0 |
| (daN/cm) | 0,63 | 0,75 | 0,87 | 1,18 |
| Allongement à la rupture (%) | 1,2 | 0,9 | 1,15 | 1,6 |
| **Test d'abrasion en milieu humide** | | | | |
| Dégradation : | Non | Non | Non | Non |
| Nombre de jours au bout duquel l'échantillon est attaqué : | >4 | >7 | >7 | >7 |
| **Résistance à l'acide** | <1% | <1% | <1% | <1% |
| Perte de poids (%) | | | | |

## Revendications

1. Matériau fibreux en feuille d'empâtage permanent pour batterie ouverte et/ou étanche comprenant des microfibres de verre résistantes aux électrolytes acides le matériau fibreux comprenant en outre un liant hydrophile résistant aux électrolytes acides, des fils de verre coupés et résistants aux électrolytes acides et/ou des fibres synthétiques thermoliantes et résistantes aux électrolytes acides, ayant un degré Cobb₆₀, déterminé selon la norme ISO 535, supérieur ou égal à trois fois son grammage, et comprenant, en poids sec, la somme faisant 100 :
- entre 10 et 99,9 parts desdites microfibres de verre, et
- entre 0,1 et 50 parts dudit liant,
- entre 0 et 70 parts desdits fils de verre coupés,
- entre 0 et 90 parts desdites fibres synthétiques thermoliantes,
le grammage dudit matériau étant supérieur ou égal à 10 g/m² et inférieur ou égal à 60g/m².

2. Matériau selon la revendication 1, **caractérisé par le fait que** lesdites microfibres de verre ont un diamètre inférieur à 5 µm.

3. Matériau selon l'une des revendications précédentes, **caractérisé par le fait que** ledit liant est réticulé, en particulier thermoréticulé.

4. Matériau selon l'une des revendications précédentes, **caractérisé par le fait que** ledit liant est choisi parmi les liants polymères à base acrylique, époxy, phénolique, polyester et polyuréthane, de préférence parmi ceux à base acrylique.

5. Matériau selon l'une des revendications précédentes, **caractérisé par le fait que** ledit matériau comprend, en poids sec, la somme faisant 100:
- entre 65 et 80 parts desdites microfibres de verre, et
- entre 5 et 10 parts dudit liant,
- entre 0 et 5 parts desdits fils de verre coupés,
- entre 15 et 20 parts desdites fibres synthétiques thermoliantes.

6. Matériau selon l'une des revendications précédentes, **caractérisé par le fait que** lesdits fils de verre coupés ont un diamètre supérieur ou égal à 5 µm et une longueur supérieure ou égale à 3 mm.

7. Matériau selon l'une des revendications précédentes, **caractérisé par le fait que** lesdites fibres synthétiques sont choisies parmi les fibres bicomposées ayant une âme en polyester et une couche externe en (co)polyester ayant un point de fusion inférieur à 130°C, de préférence leur diamètre étant supérieur ou égal à 5 µm et leur longueur supérieure ou égale à 3 mm.

8. Matériau selon l'une des revendications précédentes, **caractérisé par le fait que** ledit matériau a un grammage supérieur ou égal à 20 g/m².

9. Matériau selon la revendication précédente, **caractérisé par le fait qu'**il a un grammage compris entre 30 et 60 g/m².

10. Matériau selon l'une des revendications précédentes, **caractérisé par le fait que** ledit matériau a une porosité déterminée selon la norme BCI IV 34-1 supérieure ou égale à 85%, de préférence supérieure ou égale à 90%.

11. Matériau selon l'une des revendications précédentes, **caractérisé par le fait que** ledit matériau a une, résistance mécanique divisée par le grammage en g/m² et multipliée par 100 supérieure ou égale à 4 daN/pouce.

12. Matériau selon l'une des revendications précédentes, **caractérisé par le fait qu'**il est obtenu par un procédé voie humide.

13. Batterie ouverte et/ou étanche comprenant un matériau fibreux en feuille d'empâtage permanent selon l'un des revendications 1 à 12.

14. Procédé d'empâtage d'une grille d'électrode pour batterie ouverte et/ou étanche par une pâte de matière active, **caractérisé par le fait qu'**il utilise un matériau fibreux en feuille d'empâtage permanent tel que décrit à l'une des revendications 1 à 12.

## Patentansprüche

1. Fasermaterial in Form einer permanenten Pastenaufbringungsschicht für eine offene und/oder dichte Batterie mit gegenüber sauren Elektrolyten widerstandsfähigen Glas-Mikrofasern, wobei das Fasermaterial unter anderem ein gegenüber sauren Elektrolyten widerstandsfähiges hydrophiles Bindemittel, gegenüber sauren Elektrolyten widerstandsfähige geschnittene Glasfasern und/oder gegenüber sauren Elektrolyten widerstandsfähige heißverbundene Synthetikfasern umfasst, einen nach der Norm ISO 535 bestimmten Cobb₆₀-Grad von mindestens dem Dreifachen seines Flächengewichts aufweist und im Trockengewicht bei einer Summe von 100 Folgendes umfasst:
zwischen 10 und 99,9 Teile der genannten Glas-Mikrofasern, und
zwischen 0,1 und 50 Teile des genannten Bindemittels,
zwischen 0 und 70 Teile der genannten geschnittenen Glasfasern,
zwischen 0 und 90 Teile der genannten heißverbundenen Synthetikfasern,
wobei das Flächengewicht des genannten Materials größer oder gleich 10 g/m² und kleiner oder gleich 60 g/m² beträgt.

2. Material nach Anspruch 1, **dadurch gekennzeichnet, dass** die Glas-Mikrofasern einen Durchmesser von weniger als 5 µm aufweisen.

3. Material nach einem der vorhergehenden Ansprüche, **dadurch gekennzeichnet, dass** das Bindemittel vernetzt, insbesondere heißvernetzt ist.

4. Material nach einem der vorhergehenden Ansprüche, **dadurch gekennzeichnet, dass** das Bindemittel unter polymeren Bindemitteln auf Acryl-, Epoxi-, Phenol-, Polyester- und Polyurethanbasis, vorzugsweise unter solchen auf Acrylbasis ausgewählt ist.

5. Material nach einem der vorhergehenden Ansprüche, **dadurch gekennzeichnet, dass** es im Trockengewicht bei einer Summe von 100 Folgendes umfasst:
zwischen 65 und 80 Teile der genannten Glas-Mikrofasern, und
zwischen 5 und 10 Teile des genannten Bindemittel,
zwischen 0 und 5 Teile der genannten geschnittenen Glasfasern,
zwischen 15 und 20 Teine der genannten heißverbundenen Synthetikfasern.

6. Material nach einem der vorhergehenden Ansprüche, **dadurch gekennzeichnet, dass** die geschnittenen Glasfasern einen Durchmesser von größer oder gleich 5 µm und eine Länge von größer oder gleich 3 mm aufweisen.

7. Material nach einem der vorhergehenden Ansprüche, **dadurch gekennzeichnet, dass** die Synthetikfasern unter zweikomponentigen Fasern mit einer Polyesterseele und einer (Co-) Polyester-Außenschicht mit einem Schmelzpunkt von mehr als 130°C ausgewählt sind und vorzugsweise ihr Durchmesser größer oder gleich 5 µm und ihre Länge größer oder gleich 3 mm beträgt.

8. Material nach einem der vorhergehenden Ansprüche, **dadurch gekennzeichnet, dass** es ein Flächengewicht von größer oder gleich 20 g/m² aufweist.

9. Material nach dem vorhergehenden Anspruch, **dadurch gekennzeichnet, dass** es ein Flächengewicht zwischen 30 und 60 g/m² aufweist.

10. Material nach einem der vorhergehenden Ansprüche, **dadurch gekennzeichnet, dass** es eine nach der Norm BCI IV 34-1 bestimmte Porosität von größer oder gleich 85%, vorzugsweise größer oder gleich 90% aufweist.

11. Material nach einem der vorhergehenden Ansprüche, **dadurch gekennzeichnet, dass** es eine mechanische Festigkeit geteilt durch das Flächengewicht in g/m² und multipliziert mit 100 von größer oder gleich 4 daN/pouce aufweist.

12. Material nach einem der vorhergehenden Ansprüche, **dadurch gekennzeichnet, dass** es in einem Nassverfahren gewonnen ist.

13. Offene und/oder dichte Batterie mit einem Fasermaterial in Form einer permanenten Pastenaufbringungsschicht nach einem der Ansprüche 1 bis 12.

14. Pastenaufbringungsverfahren für ein Elektrodengitter für eine offene und/oder dichte Batterie mittels einer Paste aus aktivem Material, **dadurch gekennzeichnet, dass** das Verfahren ein Fasermaterial in Form einer permanenten Pastenaufbringungsschicht nach einem der Ansprüche 1 bis 12 verwendet.

## Claims

1. A fiber Material in the form of a permanent pasting sheet for an open and/or sealed battery, comprising glass microfibers that withstand acid electrolytes, the fiber material further comprising a hydrophilic binder that withstands acid electrolytes, cut glass filaments that withstand acid electrolytes and/or synthetic hot-melt fibers that withstand acid electrolytes, having a Cobb₆₀ degree, determined using the standard ISO 535, that is greater than or equal to three times its weight, and comprising in dry weight for a total of 100:
· 10 to 99.9 parts of said glass microfibers;
· 0.1 to 50 parts of said bender;
· 0 to 70 parts of said cut glass filaments; and
· 0 to 90 parts of said synthetic hot-melt fibers,
the weight of said material bei greater than or equal to 10 g/m² and less than or equal to 60 g/m².

2. A material according to claim 1, **characterized by** the fact that said glass microfibers have a diameter less than 5 µm.

3. A material according to either preceding claim, **characterized by** the fact that the binder is cured, in particular hot-cured.

4. A material according to any preceding claim, **characterized by** the fact that said binder is selected from polymer binders that are acrylic-, epoxy-, phenolic-, polyester-, and polyurethane-based, and preferable from those that are acrylic-based.

5. material according to any preceding claim, **characterized by** the fact that said material comprises, in dry weight for a total of 100:
· 65 to 80 parts of said glass microfibers;
· 5 to 10 parts of said binder;
· 0 to 5 parts of said cut glass filaments; and
· 15 to 20 parts of synthetic hot-melt fibers.

6. A material according to any preceding claim, **characterized by** the fact that said cut glass filaments have a diameter greater than or equal to 5 µm and a length greater than or equal to 3 mm.

7. A material according to any preceding claim, **characterized by** the fact that said synthetic fibers selected from two-component fibers having a polyester core and an outer layer of (co)polyester having a melting point below 130°C, of diameter that is referable greater than or equal to 5 µm and of length that is greater than or equal to 3 mm.

8. A material according to any preceding claim, **characterized by** the fact that said material presents a weight greater than or equal to 20 g/m².

9. A material according to the preceding claim, **characterized by** the fact that it presents a weight lying in the range 30 g/m² to 60 g/m².

10. A material according to any preceding claim, **characterized by** the fact that said material presents porosity as determined using the standard BCI IV 34-1 that is greater than or equal to 85%, preferably greater than or equal to 90%.

11. A material according to any preceding claim, **characterized by** the fact that said material presents mechanical strength divided by weight in g/m² and multiplied by 100 that is greater than or equal to 4 daN/in.

12. A material according to any preceding claim, **characterized by** the fact that it is obtained by a wet method.

13. An open and/or sealed battery including a fiber material constituting a permanent posting sheet in accordance with any one of claims 1 to 12.

14. A method of pasting an electrode grid for an open and/or sealed battery with a paste of active material, being **characterized by** the fact that it uses a fiber material constituting a permanent pasting sheet as described in any one of claims 1 to 12.
